# EUROPÄISCHE PATENTANMELDUNG

(11) **EP 3 957 669 A1**
(43) Veröffentlichungstag der Anmeldung: **23.02.2022**
(21) Anmeldenummer: 21191228.2
(22) Anmeldetag: 13.08.2021
(51) Int. Cl.: C08G 18/42, C08F 20/18, C08F 20/68, C08G 18/48, C08G 18/76, C08L 75/06, C08L 75/08

(54) **HERSTELLUNG VON POLYURETHANSCHAUM**

(30) Priorität: 20.08.2020 EP 20191881
(71) Anmelder: Evonik Operations GmbH, 45128 Essen (DE)
(72) Erfinder: Wagner, Michael, 45659 Recklinghausen (DE); Schiller, Carsten, 40885 Ratingen (DE); Ferenz, Michael, 45147 Essen (DE); Otto, Sarah, 45138 Essen (DE); Kömmelt, Sabine, 64285 Darmstadt (DE)
(74) Vertreter: Evonik Patent Association

(57) **Zusammenfassung**

Es werden Zusammensetzungen zur Herstellung von Polyurethanhartschaum beschrieben, umfassend zumindest eine Isocyanat-Komponente, eine Polyolkomponente, optional einen Katalysator, der die Ausbildung einer Urethan- oder Isocyanurat-Bindung katalysiert, wobei die Zusammensetzung als Treibmittel Kohlenwasserstoffe mit 3, 4 oder 5 Kohlenstoff-Atomen, Fluorkohlenwasserstoffe, Hydrofluoroolefine (HFO), Hydrohaloolefine, Sauerstoff-haltige Treibmittel und/oder Chlorkohlenwasserstoffen aufweist, sowie Acrylat- und/oder Methacrylat-Copolymere als Schaumstabilisatoren umfasst.

## Beschreibung

Die vorliegende Erfindung liegt auf dem Gebiet der Polyurethanschäume. Insbesondere betrifft sie die Herstellung von Polyurethanhartschäumen unter Einsatz bestimmter Treibmittel sowie von Acrylat- und/oder Methacrylat-Copolymeren als Schaumstabilisator. Weiterhin betrifft sie entsprechende Zusammensetzungen sowie die Verwendung der Schäume, die erfindungsgemäß hergestellt wurden. Es handelt sich hierbei insbesondere um Polyurethanhartschäume.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden Polyurethan auch weitere funktionelle Gruppen gebildet werden, wie z.B. Allophanate, Biurete, Harnstoffe, Carbodiimide, Uretdione, Isocyanurate oder Uretimine. Die am meisten bevorzugten Schäume im Rahmen der vorliegenden Erfindung sind Polyurethanhartschäume.

Bei der Herstellung von Polyurethan- und Polyisocyanurat-Schaumstoffen, insbesondere entsprechenden Hartschaumstoffen werden zellstabilisierende bzw. schaumstabilisierende Additive eingesetzt, welche für eine feinzellige, gleichmäßige und störungsarme Schaumstruktur sorgen sollen und damit die Gebrauchseigenschaften, so zum Beispiel besonders das thermische Isolationsvermögen des Hartschaumstoffes im wesentlichen Maße positiv beeinflussen. Besonders effektiv sind Tenside auf der Basis von Polyether-modifizierten Siloxanen, welche daher den bevorzugten Typ der Schaumstabilisatoren darstellen.

Verschiedene Veröffentlichungen bezüglich der Verwendung von auf Siloxan basierenden Additiven wurden bereits publiziert. Meist kommen hierbei Polyethersiloxan-Schaumstabilisatoren (PES) zum Einsatz.

Die EP 0 570 174 B1 beschreibt Polyethersiloxane, die sich für die Herstellung von PolyurethanHartschäumen unter Verwendung von organischen Treibmitteln, insbesondere Fluorchlorkohlenwasserstoffen wie CFC-11 eignen.

In der EP 0 533 202 A1 werden Polyethersiloxane beschrieben, die SiC-gebundene Polyalkylenoxid-Reste tragen und bei der Verwendung von Hydrochlorfluorkohlenwasserstoffen, wie z. B. HCFC-123, als Treibmittel, geeignet sind.

Die EP 0 877 045 B1 beschreibt für dieses Herstellverfahren analoge Strukturen, die sich durch ein vergleichsweise höheres Molekulargewicht und durch die Kombination zweier Polyethersubstituenten an der Siloxankette von den erstgenannten Schaumstabilisatoren abheben.

EP1544235 beschreibt typische Polyether-modifizierte Siloxane für PU-Hartschaumanwendungen. Hier werden Siloxane mit 60 bis 130 Si-Atomen und unterschiedlichen Polyethersubstituenten R, deren Mischungsmolgewicht 450 bis 1000 g/mol beträgt und deren Ethylenoxidanteil bei 70 bis 100 mol % liegt, verwendet.

In CN103055759, werden Polyether-modifizierte Siloxane beschrieben, die eine verbesserte Zellöffnung bewirken. Es sind mindestens 18 Si-Einheiten im Siloxan enthalten und es werden verschiedenartige Seitenketten zur Modifizierung verwendet.

EP 1873209 beschreibt Polyether-modifizierte Siloxane zur Herstellung von PU-Hartschäumen mit verbesserten Brandeigenschaften. Hier sind 10 bis 45 Si-Atome in den Siloxanen enthalten und die Polyether-Seitenketten bestehen zu mind. 90% aus Ethylenoxid-Einheiten.

EP 2465891 A1 beschreibt Polyether-modifizierte Siloxane bei denen die Polyetherseitenketten teilweise OH-Gruppen tragen. Hierbei enthalten die Siloxane mindestens 10 Si Atome.

EP 2465892 A1 beschreibt Polyether-modifizierte Siloxane bei denen die Polyetherseitenketten hauptsächlich sekundäre OH-Endgruppen tragen, wobei auch hier die Siloxane mindestens 10 Si Atome enthalten.

In DE 3234462 werden Siloxane zur Verwendung in Weichschaum, speziell Weichformschaum, beschrieben. Hier werden Kombinationen aus Polyether-modifizierten Siloxanen (PES) und Polydimethylsiloxanen beschrieben, wobei die PES 4 bis 15 Si-Einheiten enthalten.

Nichtsdestotrotz besteht weiterhin ein Bedarf an weiteren Schaumstabilisatoren für PU-Schaum, vorzugsweise für PU-Hartschaum, und insbesondere an solchen Schaumstabilisatoren, welche eine Siloxan-freie Schaumstabilisierung grundsätzlich ermöglichen.

Die konkrete Aufgabe der vorliegenden Erfindung war es nun, die Bereitstellung von PU-Hartschäumen zu ermöglichen, wobei eine Siloxan-freie Schaumstabilisierung grundsätzlich realisiert werden kann.

Überraschenderweise wurde nun gefunden, dass bei kombinierter Verwendung von bestimmten Treibmitteln sowie Acrylat- und/oder Methacrylat-Copolymeren als Schaumstabilisatoren PU-Hartschäume in einwandfreier Qualität hergestellt werden können. Als erfindungsgemäße Treibmittel können Kohlenwasserstoffe mit 3, 4 oder 5 Kohlenstoff-Atomen, Fluorkohlenwasserstoffe, Hydrofluoroolefine (HFO), Hydrohaloolefine, Sauerstoff-haltige Treibmittel und/oder Chlorkohlenwasserstoffe eingesetzt werden.

Die erfindungsgemäße Kombination aus Treibmitteln sowie Acrylat- und/oder Methacrylat-Copolymeren als Schaumstabilisatoren ermöglicht grundsätzlich eine Siloxan-freie Schaumstabilisierung, d.h. sie ermöglicht den vollständigen Verzicht auf Siloxan basierter Additive, wie z.B. den bekannten Polyethersiloxan-Schaumstabilisatoren. Allerdings erlauben sie auch den gemeinsamen Einsatz mit den aus dem Stand der Technik bekannten Siloxan-haltigen-Stabilisatoren. Beides ist von der vorliegenden Erfindung mitumfasst.

Gegenstand der Erfindung ist vor diesem Hintergrund eine Zusammensetzung zur Herstellung von Polyurethanhartschaum, umfassend zumindest eine Isocyanat-Komponente, eine Polyolkomponente, optional einen Katalysator, der die Ausbildung einer Urethan- oder Isocyanurat-Bindung katalysiert, wobei die Zusammensetzung als Treibmittel Kohlenwasserstoffe mit 3, 4 oder 5 Kohlenstoff-Atomen, Fluorkohlenwasserstoffe, Hydrofluoroolefine (HFO), Hydrohaloolefine, Sauerstoff-haltige Treibmittel und/oder Chlorkohlenwasserstoffe aufweist, sowie Acrylat- und/oder Methacrylat-Copolymere als Schaumstabilisatoren umfasst.

Der erfindungsgemäße Gegenstand ermöglicht die Bereitstellung von PU-Hartschaumstoff unter Verzicht auf die bekannten Siloxan-haltigen-Stabilisatoren. Die resultierenden PU-Schaumstoffe erfüllen dennoch die bekannten Anforderungen. Sie sind vorteilhafterweise dimensionsstabil, hydrolysestabil und weisen ein hervorragendes Langzeitverhalten auf. Sie verfügen vorteilhafterweise über sehr gute Isolationseigenschaften, ein sehr hohes Dämmvermögen, hohe mechanische Festigkeit, hohe Steifigkeit und hohe Druckfestigkeit. Der erfindungsgemäße Gegenstand ermöglicht darüber hinaus aber auch die Bereitstellung von PU-Hartschaumstoff unter gemeinsamem Einsatz mit den aus dem Stand der Technik bekannten Siloxan-haltigen-Stabilsatoren.

Acrylat- und/oder Methacrylat-Copolymere sind aus dem Stand der Technik bereits bekannt.

Wenn die erfindungsgemäß einzusetzenden Acrylat- und/oder Methacrylat-Copolymere auf mindestens einem Co-Monomer des Typs H₂C=CR¹-COOR² und mindestens einem Co-Monomer des Typs H₂C=CR¹-COOR³ basieren, wobei
- R¹: -H oder -CH₃, wobei innerhalb eines Moleküls verschiedene Co-Monomere mit untereinander verschiedenen Substituenten R¹ vorliegen können,
- R²: unabhängig voneinander ein Rest aus der Gruppe gesättigter oder ungesättigter, linearer, cyclischer oder verzweigter, aliphatischer oder aromatischer Kohlenwasserstoffe mit 1 bis 25 C-Atomen, vorzugsweise Methyl, Ethyl, n-Butyl, i-Butyl, t-Butyl, 2-Ethylhexyl, Isodecyl, Cyclohexyl, Benzyl, Phenyl, Isobornyl oder Allyl, wobei innerhalb eines Moleküls verschiedene Co-Monomere mit untereinander verschiedenen Substituenten R² vorliegen können,
- R³: unabhängig voneinander ein Rest aus der Gruppe der Polyether basierend auf Struktur 1, wobei innerhalb eines Moleküls verschiedene Co-Monomere mit untereinander verschiedenen Substituenten R³ vorliegen können, 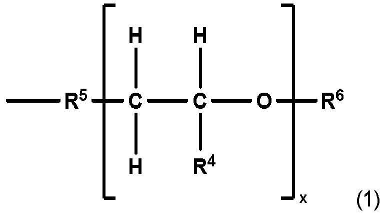
worin
- x: 3 bis 500, vorzugsweise > 5, insbesondere 8 bis 100,
- R⁴: unabhängig voneinander ein Wasserstoffrest oder ein Rest aus der Gruppe gesättigter oder ungesättigter, linearer, cyclischer oder verzweigter, aliphatischer oder aromatischer Kohlenwasserstoffe mit 1 bis 12 C-Atomen, besonders bevorzugt -H, Methyl, Ethyl oder Styryl, wobei innerhalb eines Restes R³ verschiedene Substituenten R⁴ in beliebiger Reihenfolge oder Sequenz vorliegen können,
- R⁵: -CH₂-O-, -CH₂-CH₂-O-, -CH₂-CH₂-CH₂-O-, -CH₂-CH₂-CH₂-CH₂-O- oder -CH₂-CH₂- CH₂-CH₂-CH₂-O-, wobei R⁵ auch entfallen kann,
- R⁶: unabhängig voneinander ein Wasserstoffrest, ein Rest aus der Gruppe gesättigter oder ungesättigter, linearer, cyclischer oder verzweigter, aliphatischer oder aromatischer Kohlenwasserstoffe mit 1 bis 25 C-Atomen, ein Acyl-Rest, ein Rest der Struktur -CH₂-CH(OH)-CH₂OH oder ein Rest der Struktur -CH₂-C(CH₂OH)₂-CH₂-CH₃, besonders bevorzugt -H, Methyl, Ethyl, n-Propyl, i-Propyl, n-Butyl, i-Butyl, sec-Butyl oder t-Butyl, wobei innerhalb eines Moleküls verschiedene Co-Monomere mit untereinander verschiedenen Substituenten R⁶ vorliegen können,
so liegt eine besonders bevorzugte Ausführungsform der Erfindung vor.

Weisen die erfindungsgemäß einzusetzenden Acrylat- und/oder Methacrylat-Copolymere ein mittels Gelpermeationschromatographie nach DIN 55672-1:2016-03 (Eluent: THF; Standard: PMMA) ermitteltes zahlengemitteltes Molekulargewicht Mn im Bereich von 500 bis 100.000 g/mol, besonders bevorzugt 1.000 bis 20.000 g /mol auf, so liegt eine weitere besonders bevorzugte Ausführungsform der Erfindung vor.

Im Sinne der Erfindung einsetzbare Acrylat- und/oder Methacrylat-Monomere sind auch kommerziell erhältlich, z.B. unter dem Markennamen VISIOMER von der Firma Evonik Operations GmbH.

Beispiele hierfür, jedoch nicht darauf eingeschränkt, sind Methyl(meth)acrylat, Ethyl(meth)acrylat, Propyl(meth)acrylat, lsopropyl(meth)acrylat, Butyl(meth)acrylat, Isobutyl(meth)acrylat, Hexyl(meth)acrylat, Ethylhexyl(meth)acrylat, Isodecyl(meth)acrylat, Cyclohexyl(meth)acrylat, Tetrahydrofurfuryl(meth)acrylat, Isobornyl(meth)acrylat, Benzyl(meth)acrylat, Phenyl(meth)acrylat, Phenylethyl(meth)acrylat), 3,3,5-Trimethylcyclohexyl(meth)acrylat, Hydroxyalkyl(meth)acrylate, wie 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat; Glycoldimethacrylate, wie 1,4-Butandiolmethacrylat, 2-Butoxyethylmethacrylat, 2-Ethoxyethoxymethylmethacrylat, 2-Ethoxyethylmethacrylat; Methacrylate von Etheralkoholen, wie Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat und ethoxylierte oder propoxylierte (Meth)acrylate, die bevorzugt 1 bis 20, insbesondere 2 bis 8 Ethoxygruppen oder Propoxygruppen aufweisen.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Außerdem sind Verfahren zur Herstellung einsetzbarer Acrylat- und/oder Methacrylat-Copolymere dem Fachmann aus dem Stand der Technik bekannt und sind beispielsweise in EP1070730 oder US9349500 B2 beschrieben.

Als Initiatoren können prinzipiell unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. In manchen Fällen kann es auch vorteilhaft sein, Mischungen verschiedener Initiatoren zu verwenden, beispielsweise Mischungen aus Wasserstoffperoxid und Natrium- oder Kaliumperoxodisulfat. Organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butyl-peroxy-2-ethylhexanoat, tert.-Butylperisononanoat, tert.-Butylpermaleat, tert.-Butylperbenzoat, Di-(2-ethylhexyl)peroxydicarbonat, Dicyclohexylperoxydicarbonat, Di-(4-tert.-butylcyclohexyl)peroxydicarbonat, Dimyristilperoxydicarbonat, Diacetylperoxydicarbonat, Allylperester, Cumylperoxyneodecanoat, tert.-Butyl-per-3,5,5-trimethylhexanoat, Acetylcyclohexylsulfonylperoxid, Dilaurylperoxid, und tert.-Amyl-peroxy-2-ethylhexanoat. Weitere Initiatoren sind Azoverbindungen, z.B. 2,2'-Azobisisobutyronitril, 2,2'-Azobis(2,4-dimethylvaleronitril) und 2,2'-Azobis(4-methoxy-2,4-dimethylvaleronitril).

Überraschenderweise konnte im Rahmen der vorliegenden Erfindung gefunden werden, dass erfindungsgemäße Acrylat- und/oder Methacrylat-Copolymere vorzugsweise mit tert.-Butyl-peroxy-2-ethylhexanoat (TBPEH) oder tert-Amyl-peroxy-2-ethylhexanoat (APO) oder einer Kombination aus TBPEH und APO als Initiator hergestellt werden sollten, da dann mit Blick auf die erfindungsgemäß angestrebten Resultate noch bessere Ergebnisse erzielt werden können. Insbesondere aber unter Einsatz von Dibenzoylperoxid (BPO) als Initiator hergestellte Acrylat- und/oder Methacrylat-Copolymere erwiesen sich für die Belange der vorliegenden Erfindung als eher abträglich und eher ungeeignet. Es entspricht daher einer besonders bevorzugten Ausführungsform der Erfindung, wenn die erfindungsgemäß einzusetzenden Acrylat- und/oder Methacrylat-Copolymere solche sind, die nicht mit BPO als Initiator hergestellt wurden.

Weiterhin entspricht es einer besonders bevorzugten Ausführungsform dieser Erfindung, wenn die Acrylat- und/oder Methacrylat-Copolymere einen Restmonomergehalt <1% aufweisen. Der Restmonomergehalt kann über übliche Methoden bestimmt werden, insbesondere kann er über den Feststoffgehalt oder mittels GC oder HPLC bestimmt werden. Entsprechende Zusammensetzungen ermöglichen erfindungsgemäß besonders vorteilhafte Schäume, die darüber hinaus noch besonders emissionsarm sind.

Neben den erfindungsgemäß als Schaumstabilisatoren einzusetzenden Acrylat- und/oder Methacrylat-Copolymeren werden im Sinne der Erfindung bestimmte Treibmittel eingesetzt, umfassend Kohlenwasserstoffe mit 3, 4 oder 5 Kohlenstoff-Atomen, Fluorkohlenwasserstoffe, Hydrofluoroolefine (HFO), Hydrohaloolefine, Sauerstoff-haltige Treibmittel und/oder Chlorkohlenwasserstoffe.

Wiederum liegt eine weitere besonders bevorzugte Ausführungsform der Erfindung vor, wenn als Treibmittel Kohlenwasserstoffe mit 3, 4 oder 5 Kohlenstoff-Atomen, bevorzugt cyclo-, iso- und/oder n-Pentan, Fluorkohlenwasserstoffe bevorzugt HFC 245fa, HFC 134a und HFC 365mfc, perfluorierte Verbindungen wie Perfluorpentan, Perfluorhexan und/oder Perfluorhexen, Hydrofluoroolefine oder Hydrohaloolefine, bevorzugt 1234ze, 1234yf, 1224yd, 1233zd(E) und/oder 1336mzz, Sauerstoff-haltige Verbindungen wie Methylformiat, Aceton und/oder Dimethoxymethan, und/oder Chlorkohlenwasserstoffe, bevorzugt Dichlormethan und/oder 1,2-Dichlorethan eingesetzt werden.

Beträgt der Massenanteil der Gesamtmenge an Acrylat- und/oder Methacrylat-Copolymeren bezogen auf 100 Massenteile Polyolkomponente 0,1 bis 10 pphp, bevorzugt 0,5 bis 5 pphp und besonders bevorzugt 1 bis 4 pphp, so liegt wiederum eine bevorzugte Ausführungsform der Erfindung vor.

Die vorliegende Erfindung ermöglicht den Verzicht auf Si-haltige Schaumstabilisatoren. In diesem Sinne entsprechen erfindungsgemäße Zusammensetzungen, welche Si-haltige Schaumstabilisatoren, bezogen auf die Gesamtmenge an Schaumstabilisatoren, zu weniger als 15 Gew.-%, vorzugsweise weniger als 10 Gew.-%, weiter bevorzugt weniger als 5 Gew.-%, bevorzugter weniger als 3 Gew.-%, noch bevorzugter weniger als 1 Gew.-%, insbesondere weniger als 0,5 Gew.-% oder gar nicht enthalten, einer bevorzugten Ausführungsform der Erfindung.

Wie erwähnt, ermöglicht die vorliegende Erfindung darüber hinaus aber auch den parallelen Einsatz von Si-haltigen Schaumstabilisatoren. In diesem Sinne entsprechen erfindungsgemäße Zusammensetzungen, welche Si-haltige Schaumstabilisatoren, bezogen auf die Gesamtmenge an Schaumstabilisatoren, zu mehr als 1 Gew.-%, vorzugsweise mehr als 10 Gew.-%, insbesondere mehr als 20 Gew.-% enthalten, einer bevorzugten Ausführungsform der Erfindung. Im Rahmen solcher Ausführungsform sind z.B. auch 50 Gew-%:50 Gew.-% Mischungen möglich, d.h. die Zusammensetzung würde zu gleichen Teilen das erfindungsgemäß einzusetzende Acrylat- und/oder Methacrylat-Copolymere als auch Si-haltige Schaumstabilisatoren umfassen. Es wurde nämlich überraschend gefunden, dass das erfindungsgemäß einzusetzende Acrylat- und/oder Methacrylat-Copolymere die Emulgierfähigkeit von Si-haltigen Schaumstabilisatoren verbessert.

Neben den erfindungsgemäß einzusetzenden Acrylat- und/oder Methacrylat-Copolymeren können prinzipiell alle nach dem Stand der Technik bekannten schaumstabilisierenden Komponenten zusätzlich zum Einsatz kommen.

Die erfindungsgemäß einzusetzenden Acrylat- und/oder Methacrylat-Copolymere können in Substanz oder auch in einem Lösungsmittel zur Verwendung kommen. Hierbei können alle geeigneten Substanzen zum Einsatz kommen, die bei der Herstellung von PU-Schäumen verwendbar sind. Bevorzugt können als Lösungsmittel Substanzen verwendet werden, die in üblichen Rezepturen bereits zum Einsatz kommen wie z.B. OH-funktionelle Verbindungen, Polyole, Flammschutzmittel, etc.

Eine bevorzugte erfindungsgemäße Zusammensetzung enthält die folgenden Bestandteile:
a) erfindungsgemäße Acrylat- und/oder Methacrylat-Copolymere, wie zuvor beschrieben,
b) mindestens eine Polyolkomponente,
c) mindestens ein Polyisocyanat und/oder Polyisocyanat-Präpolymer,
d) optional ein Katalysator, der die Reaktion von Polyolen b) mit den Isocyanaten c) beschleunigt, bzw. steuert,
e) optional weitere Schaumstabilisatoren, insbesondere entsprechende Silizium-haltige Verbindungen,
f) erfindungsgemäßes Treibmittel, wie zuvor beschrieben,
g) optional weitere Additive, Füllstoffe, Flammschutzmittel, etc.
dabei ist es bevorzugt, dass die Komponente d) zwingend enthalten ist.

Es entspricht einer bevorzugten Ausführungsform der Erfindung, wenn zur Herstellung der Polyurethanschäume neben dem erfindungsgemäßen Acrylat- und/oder Methacrylat-Copolymer und dem erfindungsgemäßen Treibmittel eine Komponente mit mindestens 2 isocyanat-reaktiven Gruppen, bevorzugt eine Polyol-Komponente, ein Katalysator sowie ein Polyisocyanat und/oder ein Polyisocyanat-Präpolymer eingesetzt werden. Dabei wird der Katalysator insbesondere über die Polyol-Komponente eingebracht. Geeignete Polyol-Komponenten, Katalysatoren sowie Polyisocyanate und/oder Polyisocyanat-Präpolymere sind dem Fachmann wohlbekannt, werden allerdings im Folgenden noch genauer beschrieben.

Als Polyolkomponente b) geeignete Polyole im Sinne der vorliegenden Erfindung sind alle organischen Substanzen mit zwei oder mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere Polyurethan-Beschichtungen, Polyurethan-Elastomeren oder auch Schaumstoffen; üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1,8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz.

Zur Herstellung von PU-Hartschäumen kommen bevorzugt Polyole oder Mischungen davon zum Einsatz mit der Maßgabe, dass zumindest 90 Gew.-Teile der enthaltenen Polyole bezogen auf 100 Gew.-Teile Polyolkomponente eine OH-Zahl größer 100, vorzugsweise größer 150, insbesondere größer 200 aufweisen. Der prinzipielle Unterschied zwischen Weichschaum und Hartschaum ist, dass ein Weichschaum ein elastisches Verhalten zeigt und reversibel verformbar ist. Wenn der Weichschaum durch Krafteinwirkung verformt wird, geht er wieder in seine Ausgangsform zurück, sobald die Krafteinwirkung entfällt. Der Hartschaum dagegen wird dauerhaft verformt. Dies ist dem Fachmann wohlbekannt.

Polyetherpolyole können nach bekannten Verfahren hergestellt werden, beispielsweise durch anionische Polymerisation von Alkylenoxiden in Gegenwart von Alkalihydroxiden, Alkalialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie beispielsweise Antimonpentachlorid oder Bortrifluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Geeignet ist auch Styroloxid. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl usw., höhere polyfunktionelle Polyole, insbesondere Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung.

Polyesterpolyole basieren auf Estern mehrwertiger aliphatischer oder aromatischer Carbonsäuren, bevorzugt mit 2 - 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Ethylenglykol, Diethylenglykol, Trimethylolpropan und Glycerin erhalten.

Polyetherpolycarbonatpolyole sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von CO₂ als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie beispielsweise in US-A 3900424 oder US-A 3953383 beschrieben sind. Des Weiteren sind mono- und binukleare Metallkomplexe zur Copolymerisation von CO2 und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Polyole auf Basis nachwachsender Rohstoffe "Natural oil based polyols" (NOPs) zur Herstellung von Polyurethanschäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO2004/020497, US2006/0229375, WO2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (WO2004/020497, US2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367).

Eine weitere Klasse von einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, beispielsweise durch in situ-Reaktion eines Isocyanats mit einem Alkanolamin in einem konventionellen Polyol gebildet, in dispergierter Form enthalten.

Eine weitere Klasse von einsetzbaren Polyolen sind solche, die als Prepolymere durch Umsetzung von Polyol mit Isocyanat in einem Molverhältnis von vorzugsweise 100 zu 1 bis 5 zu 1, bevorzugt 50 zu 1 bis 10 zu 1, erhalten werden. Solche Prepolymere werden vorzugsweise gelöst in Polyol angesetzt, wobei das Polyol bevorzugt dem zur Herstellung der Prepolymeren eingesetzten Polyol entspricht.

Ein bevorzugtes Verhältnis von Isocyanat und Polyol, ausgedrückt als Index der Formulierung, d.h. als stöchiometrisches Verhältnis von Isocyanat-Gruppen gegenüber Isocyanat-reaktiven Gruppen (z.B. OH-Gruppen, NH-Gruppen) multipliziert mit 100, liegt im Sinne dieser Erfindung im Bereich von 10 bis 1000, bevorzugt 40 bis 500. Dies entspricht einer bevorzugten Ausführungsform der Erfindung. Ein Index von 100 steht für ein molares Verhältnis der reaktiven Gruppen von 1 zu 1.

Als Isocyanatkomponenten c) werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, vorzugsweise OH-Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Besonders bevorzugt werden Isocyanate in einem Bereich von 60 bis 200 mol% relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexahydrotoluylendiisocyanat sowie die entsprechenden Isomerengemische, und vorzugsweise aromatische Di- und Polyisocyanate, wie beispielsweise 2,4- und 2,6-Toluoldiisocyanat (TDI) und die entsprechenden Isomerengemische, Naphthalindiisocyanat, Diethyltoluoldiisocyanat, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden. Ebenso können entsprechende "Oligomere" der Diisocyanate eingesetzt werden (IPDI-Trimer auf Basis Isocyanurat, Biurete-Urethdione). Des Weiteren ist der Einsatz von Präpolymeren auf Basis der oben genannten Isocyanate möglich.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind beispielsweise in EP 1712578, EP 1161474, WO 00/58383, US 2007/0072951, EP 1678232 und der WO 2005/085310 aufgeführt, auf die hier in vollem Umfang Bezug genommen wird.

Geeignete, optional einsetzbare, Katalysatoren d) im Sinne der vorliegenden Erfindung sind alle Verbindungen, die in der Lage sind die Reaktion von Isocyanaten mit OH- Funktionen, NH-Funktionen oder anderen isocyanat-reaktiven Gruppen zu beschleunigen. Hierbei kann auf die üblichen aus dem Stand der Technik bekannten Katalysatoren zurückgegriffen werden, umfassend z.B. Amine (cyclische, acyclische; Monoamine, Diamine, Oligomere mit einer oder mehreren Aminogruppen), metallorganische Verbindungen und Metallsalze, vorzugsweise die des Eisen, Bismut und Zink. Insbesondere können als Katalysatoren Gemische mehrerer Komponenten eingesetzt werden.

Es konnte gefunden werden, dass erfindungsgemäße Zusammensetzungen, die keine zinn-haltigen Katalysatoren enthalten, sich als besonders vorteilhaft zur Realisierung der erfindungsgemäß angestrebten Ergebnisse erwiesen haben. Eine erfindungsgemäße Zusammensetzung, die im Wesentlichen frei ist von Zinn-haltigen Katalysatoren, entspricht daher einer besonders bevorzugten Ausführungsform der Erfindung. Das gilt ebenso für das nachfolgend noch beschriebene Verfahren zur Herstellung von Polyurethanhartschaum. Auch dort entspricht es einer bevorzugten Ausführungsform der Erfindung, wenn im Wesentlichen keine Zinn-haltigen Katalysatoren eingesetzt werden.

Komponente e), sind optional einsetzbare weitere Schaumstabilisatoren, die keine erfindungsgemäßen Acrylat- und/oder Methacrylat-Copolymere sind. Es können vorzugsweise oberflächenaktive siliziumhaltige Verbindungen sein, die dazu dienen, die gewünschte Zellstruktur und den Verschäumungsprozess noch weiter zu optimieren. Es können im Rahmen dieser Erfindung alle Si-haltigen Verbindungen eingesetzt werden, die die Schaumherstellung unterstützen (Stabilisierung, Zellregulierung, Zellöffnung, etc.). Diese Verbindungen sind aus dem Stand der Technik hinreichend bekannt. Als oberflächenaktive Si-haltige Verbindungen können alle bekannten Verbindungen eingesetzt werden, die zur Herstellung von PU-Schaum geeignet sind.

Entsprechende, im Sinne dieser Erfindung einsetzbare Siloxanstrukturen werden z.B. in den folgenden Patentschriften beschrieben, wobei dort die Verwendung allerdings nur in klassischen Polyurethanschäumen, als Formschaum, Matratze, Isolationsmaterial, Bauschaum, etc., beschrieben ist: CN 103665385, CN 103657518, CN 103055759, CN 103044687, US 2008/0125503, US 2015/0057384, EP 1520870 A1, EP 1211279, EP 0867464, EP 0867465, EP 0275563. Diese Schriften werden hiermit als Referenz eingeführt und gelten als Teil des Offenbarungsgehaltes der vorliegenden Erfindung.

Die Verwendung von Treibmitteln f) ist obligatorisch, wie oben bereits erläutert. Es wird zwingend zumindest ein erfindungsgemäßes Treibmittel eingesetzt. Darüber hinaus können im Bedarfsfall zusätzlich auch weitere Treibmittel mitverwendet werden. Es kann mit chemischen und physikalischen Treibmitteln gearbeitet werden.

Je nach Menge des insgesamt verwendeten Treibmittels wird ein Schaum mit hoher oder niedriger Dichte hergestellt. So können Schäume mit Dichten von 5 kg/m³ bis 900 kg/m³ hergestellt werden. Bevorzugte Dichten sind 8 bis 800, besonders bevorzugt 10 bis 600 kg/m³, insbesondere 30 bis 150 kg/m³.

Als physikalische Treibmittel können grundsätzlich entsprechende Verbindungen mit passenden Siedepunkten eingesetzt werden. Ebenso können grundsätzlich chemische Treibmittel eingesetzt werden, die mit NCO-Gruppen und Freisetzung von Gasen reagieren, wie beispielsweise Wasser oder Ameisensäure. Beispiele für übliche Treibmittel sind verflüssigtes CO₂, Stickstoff, Luft, leichtflüchtige Flüssigkeiten.

Als optionale Zusatzstoffe g) können alle nach dem Stand der Technik bekannten Substanzen verwendet werden, die bei der Herstellung von Polyurethanen, vorzugsweise PU-Schaum, insbesondere von Polyurethanhartschaumstoffen, Verwendung finden, wie zum Beispiel Vernetzer und Kettenverlängerer, Stabilisatoren gegen oxidativen Abbau (so genannte Antioxidantien), Flammschutzmittel, Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, usw.

Als Flammschutzmittel kann die erfindungsgemäße Zusammensetzung alle bekannten und zur Herstellung von Polyurethan-Schäumen geeigneten Flammschutzmittel aufweisen. Geeignete Flammschutzmittel im Sinne dieser Erfindung sind bevorzugt flüssige organische PhosphorVerbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe, wie Blähgraphit, Aluminiumoxide, Antimon-Verbindungen und Melamin, geeignet. Der erfindungsgemäße Einsatz der Acrylat- und/oder Methacrylat-Copolymere ermöglicht den Einsatz sehr hoher Mengen an Flammschutzmittel, insbesondere auch flüssiger Flammschutzmittel, wie z.B. TEP, TCPP, TCEP, DMMP, was normalerweise zu eher instabilen Formulierungen führt.

Ein weiterer Gegenstand der Erfindung ist ein Verfahren zur Herstellung von Polyurethanhartschaum, durch Umsetzung einer oder mehrerer Polyolkomponenten mit einer oder mehrerer Isocyanatkomponenten, wobei die Umsetzung in Gegenwart von Treibmittel, umfassend Kohlenwasserstoffe mit 3, 4 oder 5 Kohlenstoff-Atomen, Fluorkohlenwasserstoffe, Hydrofluoroolefine (HFO), Hydrohaloolefine, Sauerstoff-haltige Treibmittel und/oder Chlorkohlenwasserstoffen, sowie von Acrylat- und/oder Methacrylat-Copolymeren als Schaumstabilisatoren erfolgt, insbesondere unter Einsatz einer erfindungsgemäßen Zusammensetzung wie zuvor beschrieben. Um Wiederholungen zu vermeiden wird hierzu auf den vorausgegangenen Text verwiesen. Insbesondere mit Blick auf bevorzugte Ausführungsformen der Erfindung wird auf den vorausgegangenen Text verwiesen. Die erfindungsgemäßen Acrylat- und/oder Methacrylat-Copolymere wirken als Schaumstabilisator.

Die erfindungsgemäß herzustellenden PU-Hartschäume, weisen Dichten von vorzugsweise 5 kg/m³ bis 900 kg/m³, bevorzugt 8 bis 800, besonders bevorzugt 10 bis 600 kg/m³, insbesondere 20 bis 150 kg/m³ auf.

Insbesondere können geschlossenzellige PU-Hartschäume, erhalten werden, wobei die Geschlossenzelligkeit vorteilhafterweise > 80%, vorzugsweise > 90 % beträgt. Dies entspricht einer ganz besonders bevorzugten Ausführungsform der Erfindung. Die Bestimmung der Geschlossenzelligkeit erfolgt im Sinne dieser Erfindung vorzugsweise nach DIN EN ISO 4590:2016-12 per Pyknometer.

Das erfindungsgemäße Verfahren zur Herstellung von PU-Hartschäumen kann nach den bekannten Methoden durchgeführt werden, beispielsweise im Handmischverfahren oder bevorzugt mit Hilfe von Verschäumungsmaschinen. Wird das Verfahren mittels Verschäumungsmaschinen durchgeführt, können Hochdruck- oder Niederdruckmaschinen verwendet werden. Das erfindungsgemäße Verfahren kann sowohl diskontinuierlich als auch kontinuierlich durchgeführt werden.

Eine bevorzugte Polyurethan- bzw. Polyisocyanurat-Hartschaumformulierung im Sinne dieser Erfindung ergibt ein Raumgewicht von 5 bis 900 kg/m³ und hat die in Tabelle 1 genannte Zusammensetzung.

**Tabelle 1:**

| Zusammensetzung einer bevorzugten Polyurethan- bzw. Polyisocyanurat-Hartschaumformulierung | |
|---|---|
| Komponente | Gewichtsanteil |
| Erfindungsgemäße Acrylat- und/oder Methacrylat-Copolymere | >0,5 bis 5 |
| Polyol | >0 bis 99,9 |
| Amin-Katalysator | 0 bis 5 |
| Metall-Katalysator | 0 bis 10 |
| Polyethersiloxan | 0 bis 5 |
| Wasser | 0,01 bis 20 |
| Erfindungsgemäßes Treibmittel | >0 bis 40 |
| Weitere Additive (Flammschutzmittel etc.) | 0 bis 300 |
| Isocyanat-Index: 10 bis 1000 | |

Für weitere bevorzugte Ausführungsformen und Ausgestaltungen des erfindungsgemäßen Verfahrens sei außerdem auf die zuvor bereits im Zusammenhang mit der erfindungsgemäßen Zusammensetzung gemachten Ausführungen, insbesondere auf die dort genannten bevorzugten Ausführungsformen verwiesen.

Ein weiterer Gegenstand der Erfindung ist ein PU-Hartschaum, erhältlich durch das genannte Verfahren.

Gemäß einer weiteren bevorzugten Ausführungsform der Erfindung weist der PU-Hartschaum ein Raumgewicht von 5 bis 900 kg/m³, bevorzugt 8 bis 750 kg/m³ , besonders bevorzugt 10 bis 350 kg/m³, insbesondere 20 bis 150 kg/m³ auf und die Geschlossenzelligkeit beträgt vorteilhafterweise > 80%, vorzugsweise > 90 %.

Die erfindungsgemäßen Polyurethanhartschäume zeichnen sich vorteilhafterweise dadurch aus, dass sie mindestens ein erfindungsgemäßes Acrylat- und/oder Methacrylat-Copolymer, wie oben beschrieben, aufweisen und unter Einsatz eines erfindungsgemäßen Treibmittels, vorzugsweise durch das erfindungsgemäße Verfahren, erhältlich sind.

Die erfindungsgemäßen PU-Schäume (Polyurethan- oder Polyisocyanuratschaumstoffe) sind PU-Hartschäume und können als oder zur Herstellung von Isoliermaterialien, vorzugsweise Dämmplatten, Kühlschränken, Isolierschäumen, Fahrzeugsitzen, insbesondere Autositzen, Dachhimmeln, Matratzen, Filterschäumen, Verpackungsschäumen oder Sprühschäumen verwendet werden.

Insbesondere in der Kühlhaus-, Kühlgeräte- und Hausgeräteindustrie; z.B. zur Herstellung von Dämmplatten für Dächer und Wände, als Isoliermaterial in Containern und Lagerhäusern für tiefgekühlte Ware sowie für Kühl- und Gefriergeräte, können die erfindungsgemäßen PU-Schäume, insbesondere PU-Hartschäume, mit Vorteil eingesetzt werden.

Weitere bevorzugte Anwendungsfelder liegen im Fahrzeugbau, insbesondere zur Herstellung von Fahrzeughimmel, Karosserieteilen, Innenverkleidungen, Kühlfahrzeugen, Großcontainern, Transportpaletten, Verpackungslaminaten, in der Möbelindustrie, z.B. für Möbelteile, Türen, Verkleidungen, in Elektronikanwendungen.

Erfindungsgemäße Kühlapparaturen weisen als Isoliermaterial einen erfindungsgemäßen PU-Hartschaum (Polyurethan- oder Polyisocyanuratschaumstoff) auf.

Ein weiterer Gegenstand der Erfindung liegt in der Verwendung des PU-Hartschaums als Isolationsmaterial in der Kältetechnik, in Kühlmöbeln, im Bau-, Automobil-, Schiffbau- und/oder Elektronikbereich, als Dämmplatten, als Sprühschaum, als Einkomponentenschaum.

Ein weiterer Gegenstand der Erfindung liegt in der Verwendung einer erfindungsgemäßen Zusammensetzung, umfassend Acrylat- und/oder Methacrylat-Copolymer als Schaumstabilisator, wie zuvor beschrieben, sowie umfassend erfindungsgemäßes Treibmittel, wie zuvor beschrieben, zur Bereitstellung von Polyurethanhartschaumstoff mit verbesserten Isoliereigenschaften.

Die erfindungsgemäßen Gegenstände sind vorstehend oder nachfolgend beispielhaft beschrieben, ohne dass die Erfindung auf diese beispielhaften Ausführungsformen beschränkt sein soll. Sind vorstehend oder nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden vorstehend oder nachfolgend Mittelwerte angegeben, so handelt es sich, wenn nicht anderes angegeben, um Gewichtsmittel. Werden vorstehend oder nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Beispiel 1: Synthese der Copolymere A bis F

### Copolymer A:

In einem 500 mL-Vierhalskolben mit Rückflusskühler und N₂-Leitung, Säbelrührer (200 Upm) und Pt100-Digital-Innenthermometer wurden 30,01 g n-Butylacetat vorgelegt und das Ölbad auf 145 °C erhitzt. Eine Mischung aus 9,2 g TBPEH (tert.-Butyl-peroxy-2-ethylhexanoat), 56,18 g Isobutylmethacrylat (i-BMA), 67,29 g MPEG500-Methacrylat (MPEG500MA) und 2,21 g 2-Mercaptoethanol wurde über einen Zeitraum von 4 h mit einer Schlauchpumpe zudosiert. Die Mischung wurde für weitere 30 min bei dieser Temperatur gerührt. Es wurde auf 80 °C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.
GPC nach DIN 55672-1:2016-03 (Eluent: THF; Standard: PMMA): Mw=5630 g/mol; Mn=2560 g/mol; PDI=2,2.

### Copolymer B:

In einem 500 mL-Vierhalskolben mit Rückflusskühler und N₂-Leitung, Säbelrührer (200 Upm) und Pt100-Digital-Innenthermometer wurden 30,01 g n-Butylacetat vorgelegt und das Ölbad auf 145 °C erhitzt. Eine Mischung aus 9,2 g TBPEH, 54,69 g Isodecylmethacrylat (IDMA), 68,77 g MPEG500MA und 2,21 g 2-Mercaptoethanol wurden über einen Zeitraum von 4 h mit einer Schlauchpumpe zudosiert. Die Mischung wurde für weitere 30 min bei dieser Temperatur gerührt. Es wurde auf 80°C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.
GPC nach DIN 55672-1:2016-03 (Eluent: THF; Standard: PMMA): Mw=5250 g/mol; Mn=2410 g/mol; PDI=2,2.

### Copolymer C:

In einem 500 mL-Vierhalskolben mit Rückflusskühler und N₂-Leitung, Säbelrührer (200 Upm) und Pt100-Digital-Innenthermometer wurden 30,01 g n-Butylacetat vorgelegt und das Ölbad auf 145 °C erhitzt. Eine Mischung aus 20,75 g BP-50-FT (BPO), 50,92 g i-BMA, 60,99 g MPEG500MA und 2,21 g 2-Mercaptoethanol wurde über einen Zeitraum von 4 h mit einer Schlauchpumpe zudosiert. Die Mischung wurde für weitere 30 min bei dieser Temperaturgerührt. Es wurde auf 80 °C abgekühlt, 0,13 g BP-50-FT gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.
GPC nach DIN 55672-1:2016-03 (Eluent: THF; Standard: PMMA): Mw=6350 g/mol; Mn=4080 g/mol; PDI=1,6.

### Copolymer D:

In einem 1000 mL-Vierhalskolben mit Rückflusskühler und N₂-Leitung, Säbelrührer (100 Upm) und Pt100-Digital-Innenthermometer wurde eine Mischung aus 265,05 g Petroleumbenzin (bp 100-120 °C) und 265,05 g Toluol vorgelegt und das Ölbad auf 135 °C erhitzt. Eine Mischung aus 4,43 g BP-50-FT, 90,59 g C17,4MA (Stearyl-Methacrylat), 55,02 g MPEG350MA (MPEG350-Methacrylat) und 19,06 g i-BMA wurde über einen Zeitraum von 5 h mit einer Schlauchpumpe zudosiert. Nach Beendigung der Zudosierung wurden 0,40 g BP-50-FT zur Nachreaktion zugegeben und 2 h weitergerührt. Es wurde auf Raumtemperatur abgekühlt und der Ansatz über Nacht ohne Rührung im Kolben belassen. Das Ölbad wurde erneut auf 130 °C aufgeheizt, nochmals 0,40 g BP-50-FT zugegeben und 3 h gerührt.

Der Ansatz wurde am Rotationsverdampfer eingeengt und das Lösemittelgemisch komplett abgezogen. 150 g des lösemittelfreien Polymers wurden in 150 g n-Butylacetat gelöst.
GPC nach DIN 55672-1:2016-03 (Eluent: THF; Standard: PMMA): Mw=14900 g/mol; Mn=8610 g/mol; PDI=1,7.

### Copolymer E:

In einem 500 mL-Vierhalskolben, mit Rückflusskühler und N₂-Leitung, Tropftrichter, KPG-Rührer (200 Upm) und Pt100-Digital-Innenthermometer wurden 29,9 g n-Butylacetat vorgelegt und das Ölbad auf 145°C erhitzt. Eine Mischung aus 9,8 g APO, 56,0 g i-BMA, 67,1 g MPEG500MA und 2,2 g 2-Mercaptoethanol wurde über einen Zeitraum von 4 h zugetropft. Dabei wurde zunächst 1,5 h mit einer Tropfgeschwindigkeit von 1 Tropfen pro 4 sek. und anschließend weitere 2,5 h mit einer Zutropfgeschwindigkeit von 1 Tropfen pro 2 sek. zugetropft und die Mischung für weitere 30 min bei dieser Temperatur gerührt. Es wurde auf 80 °C abgekühlt und 0,14 g APO gelöst in 10 g n-Butylacetat wurden zur Nachreaktion zudosiert. Weitere 15 g i-Butylacetat wurden zugegeben und es wurde 30 min ohne Heizen weiter gerührt.
GPC nach DIN 55672-1:2016-03 (Eluent: THF; Standard: PMMA): Mw=8474 g/mol; Mn=2426 g/mol; PDI=3,5.

### Copolymer F:

In einem 550 mL-Vierhalskolben, mit Rückflusskühler und N₂-Leitung, Tropftrichter, KPG-Rührer (200 Upm) und Pt100-Digital-Innenthermometer wurden 29,9 g n-Butylacetat vorgelegt und das Ölbad auf 145 °C erhitzt. Eine Mischung aus 9,8 g APO, 56,0 g i-BMA, 67,1 g MPEG500MA und 2,2 g 2-Mercaptoethanol wurde kontinuierlich über einen Zeitraum von 4 h, mit einer Zutropfgeschwindigkeit von 1 Tropfen pro 2 sek. zugetropft und die Mischung für weitere 30 min bei dieser Temperatur gerührt. Es wurde auf 80 °C abgekühlt und 0,14 g APO gelöst in 10 g n-Butylacetat wurden zur Nachreaktion zudosiert. Weitere 15 g i-Butylacetat wurden zugegeben und es wurde 30 min ohne Heizen weiter gerührt.
GPC nach DIN 55672-1:2016-03 (Eluent: THF; Standard: PMMA): Mw=6181 g/mol; Mn=2276 g/mol; PDI=2,7.

### Beispiel 2: PUR Hartschaum

Für den anwendungstechnischen Vergleich wurde folgende Schaumformulierung verwendet:

| **Komponente** | **Gewichtsanteil** |
|---|---|
| Polyetherpolyol* | 100 |
| Katalysator** | 2 |
| Surfactant*** | 2 |
| Wasser | 1 |
| Cyclopentan | 14 |
| | |
| MDI**** | 193 |

| | |
|---|---|
| *Daltolac^{®} R 471 der Firma Huntsman, OH-Zahl 470 mg KOH/g **POLYCAT^{®} 8 der Firma Evonik Operations GmbH ***Surfactants: Copolymere wie in Beispiel 1 beschrieben oder TEGOSTAB^{®} B 8491 der Evonik Operations GmbH ****Polymeres MDI, 200 mPa*s, 31,5% NCO, Funktionalität 2,7. | |

Die Durchführung der Vergleichsverschäumungen erfolgte im Handmischverfahren. Dazu wurden Polyol, Katalysatoren, Wasser, Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 7 s bei 2500 Upm verrührt und sofort in eine offene Form von 27,5 x 14 x 14 cm Größe (B x H x T) überführt.

Nach 10 min wurden die Schaumstoffe entformt. Einen Tag nach der Verschäumung wurden die Schaumstoffe analysiert. Die Porenstruktur wurden subjektiv anhand einer Skala von 1 bis 10 beurteilt, wobei 10 einen (idealisierten) ungestörten, sehr feinen Schaum und 1 einen extrem stark gestörten, groben Schaum repräsentiert.

Die Ergebnisse sind in der folgenden Tabelle zusammengestellt:

| **Surfactant** | **Rating** |
|---|---|
| TEGOSTAB B 8491 | 7,0 |
| Copolymer A | 6,5 |
| Copolymer B | 7,5 |
| Copolymer C | 1,5 |
| Copolymer D | Schaumkollaps |
| Copolymer E | 7,0 |
| Copolymer F | 7,0 |

Die Ergebnisse zeigen, dass insbesondere mit den Copolymeren A, B sowie E und F Porenstrukturen und Schaumqualitäten erzielt werden können, die auf dem gleichen Niveau oder leicht über siloxan-basierten Zellstabilisatoren liegen.

Alle anderen für den Gebrauch relevanten Schaumeigenschaften werden durch die erfindungsgemäßen Copolymere nicht oder nur unwesentlich beeinflusst.

### Beispiel 3: PIR Hartschaum

Für den anwendungstechnischen Vergleich wurde folgende Schaumformulierung verwendet:

| **Komponente** | **Gewichtsanteil** |
|---|---|
| Polyesterpolyol* | 100 |
| Amin-Katalysator** | 0,6 |
| Kalium-Trimerisierungskatalysator*** | 4 |
| Surfactant**** | 2 |
| Wasser | 1 |
| Cyclopentan | 16 |
| MDI***** | 199 |

| | |
|---|---|
| *Stepanpol^{®} PS 2352 der Firma Stepan, OH-Zahl 250 mg KOH/g **POLYCAT^{®} 5 der Firma Operations GmbH ***KOSMOS^{®} 75 der Firma Operations GmbH ****Surfactant: Copolymere wie in Beispiel 1 beschrieben oder TEGOSTAB^{®} B 8871 der Evonik Operations GmbH *****Polymeres MDI, 200 mPa*s, 31,5% NCO, Funktionalität 2,7. | |

Die Durchführung der Vergleichsverschäumungen erfolgte im Handmischverfahren. Dazu wurden Polyol, Katalysatoren, Wasser, Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine offene Form von 27,5 x 14 x 14 cm Größe (B x H x T) überführt.

Nach 10 min wurden die Schaumstoffe entformt. Einen Tag nach der Verschäumung wurden die Schaumstoffe analysiert. Die Porenstruktur wurden subjektiv anhand einer Skala von 1 bis 10 beurteilt, wobei 10 einen (idealisierten) ungestörten, sehr feinen Schaum und 1 einen extrem stark gestörten, groben Schaum repräsentiert.

Die Ergebnisse sind in der folgenden Tabelle zusammengestellt:

| **Surfactant** | **Rating** |
|---|---|
| TEGOSTAB B 8871 | 8,0 |
| Copolymer A | 7,5 |
| Copolymer B | 8,0 |
| Copolymer C | 4,5 |
| Copolymer D | 2,0 |
| Copolymer E | 8,0 |
| Copolymer F | 7,5 |

Die Ergebnisse zeigen, dass insbesondere mit den Copolymeren A, B sowie E und F Porenstrukturen und Schaumqualitäten erzielt werden können, die auf dem gleichen Niveau oder leicht über siloxan-basierten Zellstabilisatoren liegen.

Alle anderen für den Gebrauch relevanten Schaumeigenschaften werden durch die erfindungsgemäßen Copolymere nicht oder nur unwesentlich beeinflusst.

### Beispiel 4: PIR Hartschaum

Für den anwendungstechnischen Vergleich wurde folgende Schaumformulierung verwendet:

| **Komponente** | **Gewichtsanteil** |
|---|---|
| Polyesterpolyol* | 100 |
| Amin-Katalysator** | 0,4 |
| Kalium-Trimerisierungskatalysator*** | 5 |
| Surfactant**** | 2 |
| Wasser | 0,8 |
| Cyclo/Iso-pentan 70:30 | 19,5 |
| TCPP | 10 |
| MDI***** | 220 |

| | |
|---|---|
| *Stepanpol^{®} PS 2412 der Firma Stepan, OH-Zahl 240 mg KOH/g **POLYCAT^{®} 5 der Firma Evonik Operations GmbH ***KOSMOS^{®} 70 LO der Firma Evonik Operations GmbH ****Surfactant: Copolymere wie in Beispiel 1 beschrieben oder TEGOSTAB^{®} B 8871 der Evonik Operations GmbH *****Polymeres MDI, 200 mPa*s, 31,5% NCO, Funktionalität 2,7. | |

Die Durchführung der Vergleichsverschäumungen erfolgte im Handmischverfahren. Dazu wurden Polyol, Katalysatoren, Wasser, Schaumstabilisator, Flammschutzmittel und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 60 °C thermostatisierte Aluminiumform von 25 cm x 50 cm x 7 cm Größe überführt, welche mit Polyethylenfolie ausgekleidet war.

Nach 10 min wurden die Schaumstoffe entformt. Einen Tag nach der Verschäumung wurden die Schaumstoffe analysiert. Oberfläche und Innenstörungen wurden subjektiv anhand einer Skala von 1 bis 10 beurteilt, wobei 10 einem (idealisierten) ungestörten Schaum und 1 einen extrem stark gestörten Schaum repräsentiert. Die Wärmeleitzahl (λ-Wert in mW/m·K) wurde an 2,5 cm dicken Scheiben mit einem Gerät vom Typ Hesto Lambda Control, Modell HLC X206 gemessen bei einer mittleren Temperatur von 10°C entsprechend den Vorgaben der Norm EN12667:2001.

Die Ergebnisse sind in der folgenden Tabelle zusammengestellt:

| **Surfactant** | **Dichte in kg/m³** | **Wärmeleitfähigkeit in mW/mK** | **Oberflache Vorderseite** | **Oberfläche Rückseite** | **Innenstörungen** | **Porenstruktur** |
|---|---|---|---|---|---|---|
| TEGOSTAB B 8871 | 37,5 | 22,3 | 6,5 | 7,0 | 7,0 | 7,0 |
| Copolymer A | 36,7 | 22,6 | 6,5 | 6,5 | 6,0 | 5,5 |
| Copolymer B | 37,4 | 22,2 | 7,0 | 7,5 | 7,0 | 6,5 |
| Copolymer D | 33,4 | 38,7 | 3,0 | 4,0 | 3,5 | 3,0 |
| Copolymer F | 38,1 | 23,5 | 6,0 | 6,0 | 7,0 | 7,0 |

Die Ergebnisse zeigen, dass insbesondere mit den Copolymeren A und B Schaumqualitäten und Wärmeleitfähigkeiten erzielt werden können, die auf dem gleichen Niveau oder leicht über siloxan-basierten Zellstabilisatoren liegen.

Alle anderen für den Gebrauch relevanten Schaumeigenschaften werden durch die erfindungsgemäßen Copolymere nicht oder nur unwesentlich beeinflusst.

### Beispiel 5: PIR Hartschaum

Für den anwendungstechnischen Vergleich wurde folgende Schaumformulierung verwendet:

| **Komponente** | **Gewichtsanteil** |
|---|---|
| Polyesterpolyol* | 100 |
| Amin-Katalysator** | 0,4 |
| Kalium-Trimerisierungskatalysator*** | 5 |
| Surfactant**** | 2 |
| Wasser | 0,8 |
| Cyclo/Iso-pentan 70:30 | 19,5 |
| TCPP | 10 |
| MDI***** | 199 |

| | |
|---|---|
| *Isoexter 4973 der Firma COIM, OH-Zahl 210 mg KOH/g **POLYCAT^{®} 5 der Firma Evonik Operations GmbH ***KOSMOS^{®} 70 LO der Firma Evonik Operations GmbH ****Surfactant: Copolymere wie in Beispiel 1 beschrieben oder TEGOSTAB^{®}B 8871 der Evonik Operations GmbH *****Polymeres MDI, 200 mPa*s, 31,5% NCO, Funktionalität 2,7. | |

Die Durchführung der Vergleichsverschäumungen erfolgte im Handmischverfahren. Dazu wurden Polyol, Katalysatoren, Wasser, Schaumstabilisator, Flammschutzmittel und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 60 °C thermostatisierte Aluminiumform von 25 cm x 50 cm x 7 cm Größe überführt, welche mit Polyethylenfolie ausgekleidet war.

Nach 10 min wurden die Schaumstoffe entformt. Einen Tag nach der Verschäumung wurden die Schaumstoffe analysiert. Oberfläche und Innenstörungen wurden subjektiv anhand einer Skala von 1 bis 10 beurteilt, wobei 10 einem (idealisierten) ungestörten Schaum und 1 einen extrem stark gestörten Schaum repräsentiert. Die Wärmeleitzahl (λ-Wert in mW/m·K) wurde an 2,5 cm dicken Scheiben mit einem Gerät vom Typ Hesto Lambda Control, Modell HLC X206 gemessen bei einer mittleren Temperatur von 10°C entsprechend den Vorgaben der Norm EN12667:2001.

Die Ergebnisse sind in der folgenden Tabelle zusammengestellt:

| **Surfactant** | **Dichte in kg/m³** | **Wärmeleitfähigkeit in mW/mK** | **Oberflache Vorderseite** | **Oberfläche Rückseite** | **Innenstörungen** | **Porenstruktur** |
|---|---|---|---|---|---|---|
| TEGOSTAB B 8871 | 34,0 | 21,4 | 6,0 | 7,5 | 8,0 | 8,0 |
| Copolymer A | 34,1 | 22,3 | 6,0 | 6,5 | 7,0 | 7,5 |
| Copolymer B | 33,9 | 22,2 | 6,0 | 7,0 | 8,0 | 7,0 |
| Copolymer D | 31,3 | 42,1 | 3,0 | 3,5 | 2,5 | 2,0 |
| Copolymer F | 33,8 | 22,8 | 7,0 | 8,0 | 8,0 | 6,5 |

Die Ergebnisse zeigen, dass insbesondere mit den Copolymeren A und B Schaumqualitäten und Wärmeleitfähigkeiten erzielt werden können, die auf dem gleichen Niveau wie von siloxan-basierten Zellstabilisatoren liegen.

Alle anderen für den Gebrauch relevanten Schaumeigenschaften werden durch die erfindungsgemäßen Copolymere nicht oder nur unwesentlich beeinflusst.

## Patentansprüche

1. Zusammensetzung zur Herstellung von Polyurethanhartschaum, umfassend zumindest eine Isocyanat-Komponente, eine Polyolkomponente, optional einen Katalysator, der die Ausbildung einer Urethan- oder Isocyanurat-Bindung katalysiert, **dadurch gekennzeichnet, dass** die Zusammensetzung als Treibmittel Kohlenwasserstoffe mit 3, 4 oder 5 Kohlenstoff-Atomen, Fluorkohlenwasserstoffe, Hydrofluoroolefine (HFO), Hydrohaloolefine, Sauerstoff-haltige Treibmittel und/oder Chlorkohlenwasserstoffen aufweist, sowie Acrylat- und/oder Methacrylat-Copolymere als Schaumstabilisatoren umfasst.

2. Zusammensetzung nach Anspruch 1, **dadurch gekennzeichnet, dass** die Acrylat- und/oder Methacrylat-Copolymere auf mindestens einem Co-Monomer des Typs H₂C=CR¹-COOR² und mindestens einem Co-Monomer des Typs H₂C=CR¹-COOR³ basieren, wobei
R¹ unabhängig voneinander -H oder -CH₃, wobei innerhalb eines Moleküls verschiedene Co-Monomere mit untereinander verschiedenen Substituenten R¹ vorliegen können,
R² unabhängig voneinander ein Rest aus der Gruppe gesättigter oder ungesättigter, linearer, cyclischer oder verzweigter, aliphatischer oder aromatischer Kohlenwasserstoffe mit 1 bis 25 C-Atomen, vorzugsweise Methyl, Ethyl, n-Butyl, i-Butyl, t-Butyl, 2-Ethylhexyl, Isodecyl, Cyclohexyl, Benzyl, Phenyl, Isobornyl oder Allyl, wobei innerhalb eines Moleküls verschiedene Co-Monomere mit untereinander verschiedenen Substituenten R² vorliegen können,
R³ unabhängig voneinander ein Rest aus der Gruppe der Polyether basierend auf Struktur 1, wobei innerhalb eines Moleküls verschiedene Co-Monomere mit untereinander verschiedenen Substituenten R³ vorliegen können, 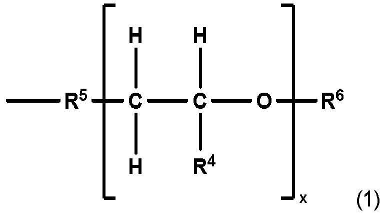
worin
x 3 bis 500, vorzugsweise > 5, insbesondere 8 bis 100,
R⁴ unabhängig voneinander ein Wasserstoffrest oder ein Rest aus der Gruppe gesättigter oder ungesättigter, linearer, cyclischer oder verzweigter, aliphatischer oder aromatischer Kohlenwasserstoffe mit 1 bis 12 C-Atomen, besonders bevorzugt -H, Methyl, Ethyl oder Styryl, wobei innerhalb eines Restes R³ verschiedene Substituenten R⁴ in beliebiger Reihenfolge oder Sequenz vorliegen können,
R⁵ -CH₂-O-, -CH₂-CH₂-O-, -CH₂-CH₂-CH₂-O-, -CH₂-CH₂-CH₂-CH₂-O- oder -CH₂-CH₂- CH₂-CH₂-CH₂-O-, wobei R⁵ auch entfallen kann,
R⁶ unabhängig voneinander ein Wasserstoffrest, ein Rest aus der Gruppe gesättigter oder ungesättigter, linearer, cyclischer oder verzweigter, aliphatischer oder aromatischer Kohlenwasserstoffe mit 1 bis 25 C-Atomen, ein Acyl-Rest, ein Rest der Struktur -CH₂-CH(OH)-CH₂OH oder ein Rest der Struktur -CH₂-C(CH₂OH)₂-CH₂-CH₃, besonders bevorzugt -H, Methyl, Ethyl, n-Propyl, i-Propyl, n-Butyl, i-Butyl, sec-Butyl oder t-Butyl, wobei innerhalb eines Moleküls verschiedene Co-Monomere mit untereinander verschiedenen Substituenten R⁶ vorliegen können.

3. Zusammensetzung nach einem der Ansprüche 1 oder 2, **dadurch gekennzeichnet, dass** als Treibmittel Kohlenwasserstoffe mit 3, 4 oder 5 Kohlenstoff-Atomen, bevorzugt cyclo-, iso- und/oder n-Pentan, Fluorkohlenwasserstoffe bevorzugt HFC 245fa, HFC 134a und HFC 365mfc, perfluorierte Verbindungen wie Perfluorpentan, Perfluorhexan und/oder Perfluorhexen, Hydrofluoroolefine oder Hydrohaloolefine, bevorzugt 1234ze, 1234yf, 1224yd, 1233zd(E) und/oder 1336mzz, Wasser, Sauerstoff-haltige Verbindungen wie Methylformiat, Aceton und/oder Dimethoxymethan, und/oder Chlorkohlenwasserstoffe, bevorzugt Dichlormethan und/oder 1,2-Dichlorethan eingesetzt werden.

4. Zusammensetzung gemäß einem der Ansprüche 1 bis 3, **dadurch gekennzeichnet, dass** die Acrylat- und/oder Methacrylat-Copolymere ein mittels Gelpermeationschromatographie nach DIN 55672-1:2016-03 (Eluent: THF; Standard: PMMA) ermitteltes zahlengemitteltes Molekulargewicht Mn im Bereich von 500 bis 100.000 g/mol, besonders bevorzugt 1.000 bis 20.000 g /mol, inbesondere 1.000 bis 15.000 g/mol aufweisen.

5. Zusammensetzung gemäß einem der Ansprüche 1 bis 4, **dadurch gekennzeichnet, dass** der Massenanteil der Gesamtmenge an Acrylat- und/oder Methacrylat-Copolymeren bezogen auf 100 Massenteile Polyolkomponente 0,1 bis 10 pphp, bevorzugt 0,5 bis 5 pphp und besonders bevorzugt 1 bis 4 pphp beträgt.

6. Zusammensetzung gemäß einem der Ansprüche 1 bis 5, **dadurch gekennzeichnet, dass** Si-haltige Schaumstabilisatoren, bezogen auf die Gesamtmenge an Schaumstabilisatoren, zu weniger als 15 Gew.-%, vorzugsweise weniger als 10 Gew.-%, insbesondere weniger als 5 Gew.-% oder gar nicht enthalten sind.

7. Zusammensetzung gemäß einem der Ansprüche 1 bis 5, **dadurch gekennzeichnet, dass** Si-haltige Schaumstabilisatoren, bezogen auf die Gesamtmenge an Schaumstabilisatoren, zu mehr als 10 Gew.-%, insbesondere mehr als 20 Gew.-% und besonders bevorzugt zu mehr als 50 Gew.-% enthalten sind.

8. Zusammensetzung gemäß einem der Ansprüche 1 bis 7, **dadurch gekennzeichnet, dass** sie im Wesentlichen frei von Zinn-haltigen Katalysatoren ist.

9. Zusammensetzung gemäß einem der Ansprüche 1 bis 8, **dadurch gekennzeichnet, dass** die Acrylat- und/oder Methacrylat-Copolymere mit TBPEH (tert.-Butyl-peroxy-2-ethylhexanoat) und/oder APO (tert-Amyl-peroxy-2-ethylhexanoat) als Initiator hergestellt wurden.

10. Zusammensetzung gemäß einem der Ansprüche 1 bis 9, **dadurch gekennzeichnet, dass** die Acrylat- und/oder Methacrylat-Copolymere solche sind, die nicht mit Dibenzoylperoxid (BPO) als Initiator hergestellt wurden.

11. Zusammensetzung gemäß einem der Ansprüche 1 bis 10, **dadurch gekennzeichnet, dass** die Acrylat- und/oder Methacrylat-Copolymere einen Restmonomergehalt <1% aufweisen.

12. Verfahren zur Herstellung von Polyurethanhartschaum unter Umsetzung einer oder mehrerer Polyolkomponenten mit einer oder mehrerer Isocyanatkomponenten, **dadurch gekennzeichnet, dass** die Umsetzung unter Einsatz einer Zusammensetzung gemäß einem der Ansprüche 1 bis 11 erfolgt.

13. Polyurethanhartschaumstoff, erhältlich durch das Verfahren nach Anspruch 12.

14. Verwendung einer Zusammensetzung nach einem der Ansprüche 1 bis 11 zur Bereitstellung von Polyurethanhartschaumstoff mit verbesserten Isoliereigenschaften.

15. Verwendung des Polyurethanhartschaumstoffs, gemäß Anspruch 13 als Dämmplatten und/oder Isolationsmittel, vorzugsweise für Kühlapparaturen.
